(19) **Europäisches Patentamt / European Patent Office / Office européen des brevets**

(11) **EP 2 496 520 B1**

(12) **FASCICULE DE BREVET EUROPEEN**

(45) Date de publication et mention de la délivrance du brevet:
**03.05.2017 Bulletin 2017/18**

(21) Numéro de dépôt: **10787502.3**

(22) Date de dépôt: **03.11.2010**

(51) Int Cl.:
**B82Y 30/00** *(2011.01)*　　**B82Y 40/00** *(2011.01)*
**C01B 32/05** *(2017.01)*　　**C01B 32/20** *(2017.01)*

(86) Numéro de dépôt international:
**PCT/FR2010/000730**

(87) Numéro de publication internationale:
**WO 2011/055039 (12.05.2011 Gazette 2011/19)**

(54) **PRÉPARATION DE GRAPHÈNE PAR AMINCISSEMENT MÉCANIQUE DE MATÉRIAUX GRAPHITIQUES**

HERSTELLUNG VON GRAPHEM MITTELS MECHANISCHER AUSDÜNNUNG VON GRAPHITMATERIALIEN

PREPARATION OF GRAPHENE BY MECHANICALLY THINNING GRAPHITE MATERIALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2009 FR 0905252**
**30.06.2010 FR 1002719**

(43) Date de publication de la demande:
**12.09.2012 Bulletin 2012/37**

(73) Titulaires:
- **Centre National de la Recherche Scientifique**
  **75794 Paris Cedex 16 (FR)**
- **Université de Strasbourg**
  **67081 Strasbourg Cedex (FR)**

(72) Inventeurs:
- **JANOWSKA, Izabela**
  **F-67100 Strasbourg (FR)**
- **BEGIN, Dominique**
  **F-67204 Achenheim (FR)**
- **CHIZARI, Kambiz**
  **F-67000 Strasbourg (FR)**
- **ERSEN, Ovidiu**
  **F-67100 Strasbourg (FR)**
- **BERNHARDT, Pierre**
  **F-67190 Heiligenberg (FR)**
- **ROMERO, Thierry**
  **F-67200 Strasbourg (FR)**
- **LEDOUX, Marc**
  **F-67000 Strasbourg (FR)**
- **PHAM-HUU Cuong**
  **F-67100 Strasbourg (FR)**

(74) Mandataire: **Schmidt, Martin Peter**
**IXAS Conseil**
**15, rue Emile Zola**
**69002 Lyon (FR)**

(56) Documents cités:
**US-A1- 2008 279 756　　US-A1- 2009 169 467**
**US-B1- 7 071 258**

- **M. HIRATA, T. GOTOU, S. HORIUCHI, M. FUJIWARA, M. OHBA: "Thin film particles of graphite oxide 1: High-yield synthesis and flexibility of the particles", CARBON, vol. 42, no. 14, 10 septembre 2004 (2004-09-10), pages 2929-2937, XP002597489,**

## Description

### Domaine technique de l'invention

La présente invention concerne la préparation de graphène, mono-, bi- et multi-couches à partir de matériaux précurseurs à base de graphite, tels que les mines de crayon ou du graphite, par un procédé d'amincissement mécanique sur la surface d'un substrat plan de rugosité contrôlée, suivie d'une sonication pour récupérer le graphène déposé sur ledit substrat dans un milieu liquide. La force d'appui lors de l'amincissement par frottement mécanique permet de contrôler le nombre de feuillets de graphène déposés sur la surface du substrat.

### Etat de la technique

Le graphène est une feuille de graphite individuelle (« mono-feuillet ») constituée par des atomes de carbone en mode d'hybridation $sp^2$ avec un arrangement selon un réseau hexagonal bidimensionnel. C'est un des matériaux les plus durs connus à ce jour. A l'intérieur d'une feuille de graphène la structure hexagonale est prédominante, cependant, on peut y trouver aussi quelques unités isolées de structure pentagonale ou heptagonale, qui constituent les défauts du matériau induisant des écarts par rapport à une structure plane exclusivement constituée de motifs hexagonaux. On connaît aussi des structures de graphène formées de plusieurs feuillet superposés ; ces structures ont été appelées FLG (« few-layer graphene »). Les structures plus épaisses ont été appelées NGP (« nano-sized graphene plates »). La distinction entre ces deux termes n'est pas très claire. La demande de brevet WO 2005/084172 propose le terme « Carbon nanoflake » (CNF) pour des formes planaires de carbone avec une épaisseur ne dépassant pas 10 nm, et le terme « Carbon nanosheet » (CNS) pour des CNF avec une épaisseur ne dépassant pas 2 nm.

La plupart des méthodes d'obtention de graphène reportées actuellement dans la littérature peuvent être classées en cinq catégories :

(A) L'obtention de graphène par une exfoliation « micromécanique » à partir de HOPG (highly oriented pyrographite). Cette première méthode est décrite dans les articles suivants :

[1] K.S. Novoselov, A.K. Geim, S.V. Morozov et al. ; Science (2004) 306, 666.
[2] K.S. Novoselov, D. Jiang et al. ; Proc. Natl.Acad. Sci. USA (2005), 102, 10451.
[3] Y. Zhang, Y. Tan, H.L. Stormer, P. Kim ; Nature (2005), 438, 201.
[4] K.S. Novoselov, A.K. Geim et al.; Nature (2005), 438, 197.
[5] K.I. Bolotin, K.J. Sikes, Z. Ziang et al. ; Sol. State Comm. (2008), 146, 351.
[6] F. Miao, S. Wijeratne, Y. Zhang, U. C. Coskon et al. ; Science (2007), 317, 1530.

(B) L'obtention de graphène par chauffage à haute température du SiC.
Cette deuxième méthode est décrite dans les articles suivants :

[7] C. Berger, Z.M. Song, X.B. Li et al. ; Science (2006), 312, (5777), 1191.

[8] C. Berger, Z.M. Song, T.B. Li et al. ; J. Phys. Chem. B (2004), 108 (52), 19912.

(C) La synthèse de graphène par dépôt sous vide (CVD, Chemical Vapour Deposition) sur un substrat métallique. Cette troisième méthode est décrite dans les articles suivants :

[9] J. Coraux, A.T. N'Diaye, C. Busse, T. Michely ; Nanoletters (2008), 8, 565.
[10] J. Vaari, J. Lahtinen, P. Hautojärvi; Catal. Lett. 55, 43 (1997).
[11] D.E. Starr, E.M. Pazhetnov et al. ; Surface Science 600, 2688 (1006).
[12] M. Dresselhaus et al., Nano Letters, article sous presse (2009)

Il s'agit d'une synthèse au sens traditionnel du terme, qui procède par voie chimique à partir de composés gazeux de masse moléculaire plus faible que celle du produit. A titre d'exemple, selon un procédé récent décrit dans la référence [12], on décompose un composé hydrocarbure sur la surface d'un métal (typiquement un substrat revêtu d'un film de nickel) pour former une solution solide métal - carbone ; après un chauffage à haute température les atomes de carbone ségrègent sur la surface du métal pour former des feuillets de graphène. Les feuillets de graphène obtenus par cette méthode possèdent des dimensions relativement importantes, de l'ordre de quelques micromètres. Cependant, la production industrielle de graphène à partir de ce procédé semble être difficile à mettre en oeuvre.

Un procédé de vapodéposition catalytique décrit dans la demande de brevet US 2005/0255034 A1 (Wang et Baker) conduit à des nanofibres composés de minces plaques de graphite superposées dans un sens perpendiculaire aux plans graphitiques.

(D) Synthèse de graphène à partir de graphite intercalé

Une quatrième catégorie de procédé utilise comme précurseur du graphite intercalé dont les plans sont beaucoup plus espacés. Ce matériau est soit attaqué chimiquement, soit soumis à une forte chaleur pour séparer les couches graphitiques. A titre d'exemple, le document WO 2008/060703 (Directa Plus Patent & Technology Limited) décrit un procédé pour préparer des feuillets très minces de graphite en exposant des feuillets de graphite intercalé brusquement à des températures d'au moins 1300°C. Dans le procédé décrit dans la demande de brevet US 2008/0206124 A1 (inventeurs : Bor Z. Jang et al.), le matériau est attaqué chimiquement par des halogènes, puis chauffé. Dans un autre procédé décrit dans le même document, le matériau est intercalé par des halogènes puis soumis, en phase liquide, à des ultrasons. Dans un autre procédé décrit dans le brevet US 7,081,258 B1 (Nanotek Instruments), le graphite intercalé est soumis à une attrition mécanique par broyage très fin.

(E) Synthèse à l'aide d'ultrasons

Une cinquième catégorie de procédé utilise des ultrasons : différents produits graphitiques sont dispersés dans un liquide et soumis à des ultrasons à la température ambiante (voir US 2008/0279756 A1 et US 2008/0248275 A1 (inventeurs : Bor Z. Jang et al.).

Aucune de ces méthodes n'est sélective pour la synthèse de graphène sous forme de mono-feuillet ou bi-feuillet ou de FLG (few-layer graphene), et conduisent la plupart du temps à des structures où s'empilent plusieurs feuilles, voire même des dizaines de feuillets. De plus, le graphène obtenu par ces méthodes se présente le plus souvent sous la forme de feuillets de petites dimensions, e.g. quelques nanomètres à quelques dizaines de nanomètres, qui sont difficiles à manipuler et difficiles à déposer sur des supports pour une étude plus approfondie par les techniques usuellement employées. De plus, la faible dimension de ces feuillets rend difficile leur utilisation dans les applications potentielles, elle engendre notamment des problèmes de jonction et de bords d'assemblage. Ces feuillets ont tendance à se plier pour former des structures complexes (appelées parfois en anglais « carbone fractals », voir le document US 2006/0121279 A1) ; ceci rend plus difficile l'étude des propriétés fondamentales de ce matériau, et complique les études visant les applications potentielles de ces matériaux. La demande de brevet US 2006/0121279 A1 décrit un procédé pour fabriquer des nanotubes de carbone à partir de graphènes par application d'une haute pression et d'une haute température.

Le graphène, à cause de sa difficulté d'obtention, est l'un des matériaux les plus chers. Son prix pourrait baisser d'une manière significative si des méthodes de synthèse plus efficaces étaient disponibles, à l'instar de ce qui a été observé dans le domaine des nanotubes de carbone vers la fin des années 90 où on a assisté à une chute importante de prix au fur et à mesure de l'optimisation des méthodes de synthèse permettant l'obtention de quantités de nanotubes plus importantes avec une meilleure sélectivité, en l'occurrence par des méthodes de croissance par CCVD (Catalytic Chemical Vapour Deposition).

Malgré l'existence de plusieurs types de procédés de laboratoire permettant d'obtenir de très petites quantités de graphènes, il existe un besoin pour développer de nouvelles méthodes de synthèse de graphène qui présentent un meilleur rendement, afin de pouvoir étudier ses propriétés physiques, chimiques et mécaniques ; ces études pourraient permettre de confronter les prédictions de différentes théories à des résultats expérimentaux. Dans ce contexte, il est aussi très intéressant de pouvoir synthétiser des feuillets de graphène de dimensions plus grandes, c'est-à-dire au moins micrométriques, afin de mieux maîtriser leur dépôt sur des surface d'accueil (substrat) et d'obtenir des résultats plus facilement interprétables et plus facilement comparables à ceux obtenus sur les matériaux carbonés conventionnels. Il existe également un besoin pour développer des nouvelles méthodes de synthèse de graphène plus simples et faisant appel à des matériaux de départ peu chers et abondant et d'éviter, dans la mesure du possible, l'utilisation des réactifs chimiques ou des températures de synthèse élevées, et qui présentent la possibilité d'une production industrielle, pour le cas où le graphène trouve des applications industrielles ; de telles méthodes n'existent pas à l'heure actuelle.

**Objets de l'invention**

L'invention concerne un procédé de fabrication d'une dispersion de particules ou feuillets de graphène dans un milieu liquide L, comprenant les étapes suivantes :

(a) on approvisionne un barreau ou bloc de matériau massif M à base de graphite ;
(b) on frotte ledit matériau M sur la surface S d'un substrat de manière à créer une trace de frottement dudit matériau M sur ladite surface S dudit substrat ;

(c) on trempe ledit substrat dans un milieu liquide L et soumet ledit milieu liquide L aux ultrasons pour obtenir une dispersion de particules ou feuillets de graphène dans ledit milieu liquide L,

sachant que les étapes (b) et (c) peuvent être réalisées au moins en partie successivement, ou en même temps.

Le procédé peut comporter en plus une étape (d) dans laquelle on sépare d'éventuelles matières organiques ou minérales présentes dans ladite dispersion, de préférence par décantation ou centrifugation, ou par dissolution chimique. Il peut comporter une étape (e) dans laquelle laquelle on sépare des particules graphitiques et/ou des feuillets de graphène trop épais éventuellement présents dans ladite dispersion, de préférence par décantation ou par centrifugation. Ainsi on obtient une dispersion appauvrie en particules graphitiques et feuillet de graphène dont l'épaisseur dépasse une valeur visée. Le procédé selon l'invention peut comporter en plus une étape dans laquelle on récupère à partir de ladite suspension les feuillets de graphène visés.

Ladite surface S (2) présente avantageusement une rugosité comprise entre 0,01 $\mu$m et 10 $\mu$m.

Avantageusement, ledit matériau à base de graphite peut être choisi parmi les mines de crayon, le graphite naturel, le graphite synthétique.

Ladite phase liquide L peut être un milieu réducteur, et comporte avantageusement un agent réducteur sélectionné dans le groupe constitué par : le $NaBH_4$, l'hydrazine, l'ammoniac.

La force d'appui dudit matériau M sur ladite surface S est avantageusement comprise entre 100 Pa et 500 000 Pa, préférentiellement entre 100 et 300 000 Pa, plus préférentiellement entre 100 et 7 000 Pa et encore plus préférentiellement entre 1 000 Pa et 6 000 Pa.

La vitesse de frottement entre ledit matériau M et ladite surface S est avantageusement comprise entre 0,001 m s$^{-1}$ et 0,1 m s$^{-1}$.

Ledit substrat est avantageusement sélectionné parmi les polymères, de préférence les polymères flexibles et/ou transparents, les verres, les céramiques, le silicium. On peut aussi utiliser des matériaux métalliques de rugosité appropriée.

Dans un mode de réalisation, ladite surface S dudit substrat et ledit matériau massif M sont en mouvement relatif selon au moins deux axes, de manière à provoquer un décalage latéral entre deux segments adjacents de traces dudit matériau M sur ladite surface S. Ledit substrat est avantageusement un disque capable de tourner autour de son axe, et dans lequel la trace de frottement dudit matériau massif M sur ladite surface est décalée en continue ou périodiquement à l'aide d'un moyen de déplacement latéral (i.e. orthogonal par rapport à l'axe de rotation du disque) de manière à obtenir une trace continue, de préférence sous la forme d'une spirale.

Dans une variante avantageuse du procédé selon l'invention, les étapes (b) et (c) sont réalisés en même temps, et au moins une partie de ladite dispersion est récoltée de manière périodique ou continue.

Dans une autre variante, qui est avantageusement combinée avec la précédente, ladite dispersion est soumise à un deuxième traitement aux ultrasons, de préférence avec une puissance d'ultrasons et/ou une durée supérieures à celles de l'étape (c). On peut aussi utiliser un traitement par micro-ondes.

Un autre objet de l'invention est un procédé de préparation de particules ou feuillets de graphène, dans lequel on prépare une dispersion de particules ou feuillets de graphène selon l'un quelconque des modes de réalisation et variantes du procédé selon l'invention, suivi d'une ou plusieurs étapes dans laquelle on récupère à partir de ladite suspension les particules ou feuillets de graphène.

Encore un autre objet de l'invention est un dispositif pour la mise en oeuvre du procédé selon l'invention, comprenant

- un moyen capable de tenir ledit barreau ou bloc en matériau massif M,
- un substrat pourvu d'une surface S pouvant être en contact avec ledit barreau ou bloc en matériau massif M,
- un moyen de déplacement permettant de générer un déplacement relatif entre ledit matériau massif M et ledit substrat,
- un moyen de régulation et/ou contrôle de la force de pression permettant de réguler, garder constant et/ou mesurer la force de pression entre ledit matériau massif M et ladite surface S dudit substrat pendant ledit déplacement relatif,
- un réservoir de liquide permettant d'immerger au moins partiellement la surface S dans une phase liquide,
- un générateur d'ultrasons permettant de soumettre ledit liquide à l'effet d'ultrasons.

## Description des figures

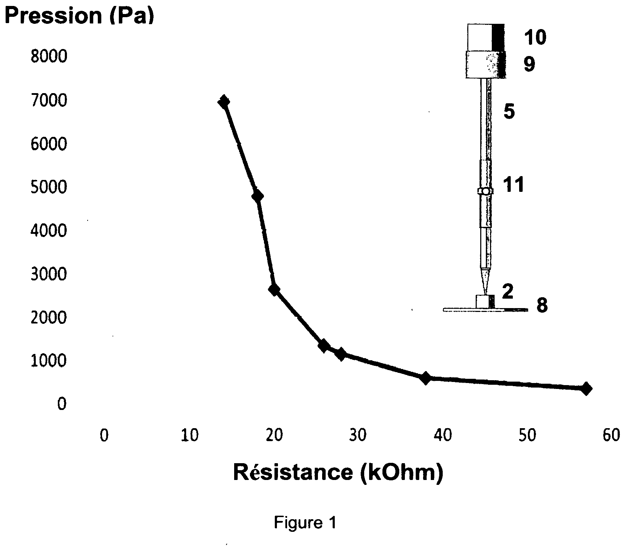

Les figures 1 à 9 concernent des modes de réalisation de l'invention.

La figure 1 montre une courbe représentant la corrélation entre la pression exercée par le matériau M sur la surface S du substrat et la résistance électrique entre la pointe de la mine de crayon et la surface S d'un disque électriquement conducteur, ladite pression étant produite par un capteur de pression. L'insert montre de manière schématique le dispositif de mesure de la pression exercée par la mine de crayon sur la surface du substrat solide.

Listes des repères :

2 : Surface d'appui S (disque d'une superficie de 100 mm$^2$)
5 : Mine de crayon (ou matériau à base de graphite)
8 : Capteur de pression
9 : Support de poids en PTFE
10 : Poids interchangeable
11 : Support fixe en verre pour maintenir la mine de crayon

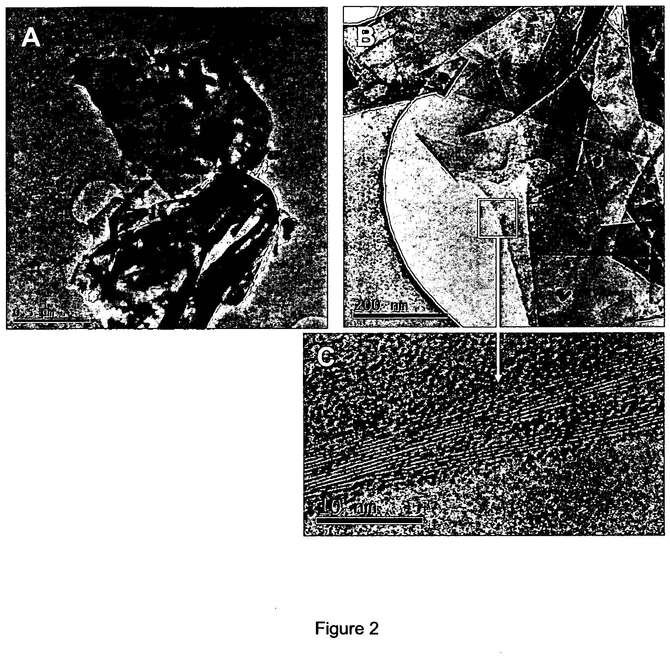

La figure 2 montre trois images obtenues par Microscopie Electronique à Transmission (MET) des feuillets de graphène obtenus selon l'invention par frottement mécanique d'une mine de crayon sur une surface d'un substrat de verre de rugosité de 1 μm.

La longueur de la barre correspond à 0,5 μm (A), 200 nm (B), 10 nm (C).

(A) : Image MET à basse résolution montrant que les feuillets de graphène obtenus ont une dimension moyenne de quelques micromètres carrés.
(B) Image MET à moyenne résolution montrant que les feuillets de graphène synthétisés par la présente invention sont de type multi-feuillets.
(C) Image MET haute-résolution de la zone indiquée sur l'image (B) montrant le nombre de feuillets de graphène de l'échantillon qui est de quatre et huit feuillets respectivement.

La figure 3 montre des images obtenues par MET de feuillets de graphène obtenus selon l'invention après une décantation de 5 minutes (images A, B), 20 minutes (images C, D, E) et 40 minutes (images F, G, H). L'image (H) est une image MET à haute résolution montrant que le FLG contient sept couches de graphène.
La longueur de la barre correspond à 1 μm (A) et (B), 5 μm (C), 2 μm (D), 1 μm (E), 2 μm (F) et (G), 20 nm (H).

La figure 4 montre des images MET des feuillets de graphène obtenus selon l'invention par frottement mécanique d'une mine de crayon sur un substrat de verre de rugosité apparente de 1 μm.

(A) Image à basse résolution montrant que les feuillets de graphène obtenus ont une taille moyenne de quelques micromètres voire plus. Longueur de la barre : 1 μm.
(B) Image à haute résolution montrant que le FLG est constitué par deux couches de graphène. Longueur de la barre : 50 nm.

La figure 5 montre des images MET des feuillets de graphène formés selon l'invention par sonication d'une trace de frottement dans une solution d'éthanol suivie d'un chauffage à 80°C.
La longueur de la barre correspond à 2 μm (A), 1 μm (B), 100 nm (C), 0,5 μm (D).

Les figures 6, 8 et 9 montrent quatre dispositifs selon l'invention utilisés pour une production en continu des feuillets de graphène multi-couches par frottement mécanique d'un matériau à base de graphite sur une surface d'un substrat rugueux.
Figure 6 (A): Dispositif utilisant un moyen de rappel (tel qu'un ressort).
Figure 6 (B) : Dispositif utilisant un servomoteur de positionnement.
Figures 8 et 9 : Dispositifs utilisant un poids.

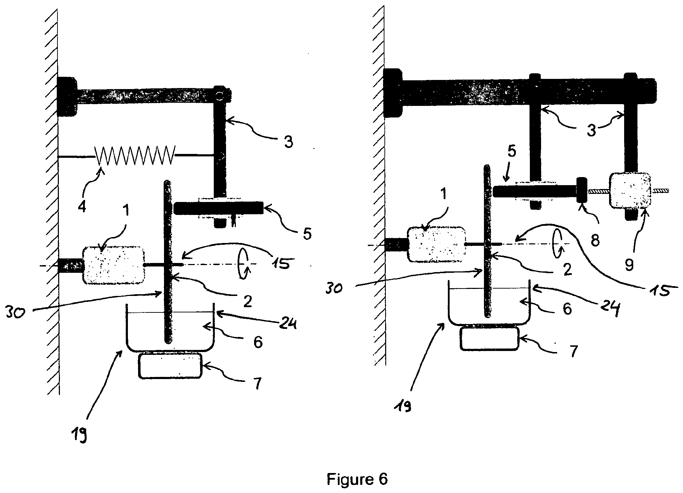

Liste additionnelle des repères pour les figures 6, 8 et 9 :

1 : Moteur pour rotation du disque
2 : Surface S abrasive (par exemple surface d'un disque en verre dépoli)
3 : Bras articulé
4 : Ressort de rappel solidaire avec le barreau de graphite
5 : Barreau de graphite
6 : Phase liquide (p. ex. eau, éthanol, toluène)
7 : Générateur d'ultra-sons
8 : Capteur de pression
9 : Servomoteur de positionnement

| 10 : | Poids |
|---|---|
| 13 : | Tube contenant le graphite |
| 14 : | Cadre |
| 15 : | Axe |
| 17,18 : | Eléments de transmission |
| 19 : | Récipient |
| 21 : | Support |
| 22 : | Moyen de vidange |
| 23 : | Moyen de régulation de débit |
| 24 : | Niveau du liquide |
| 30 : | Disque |

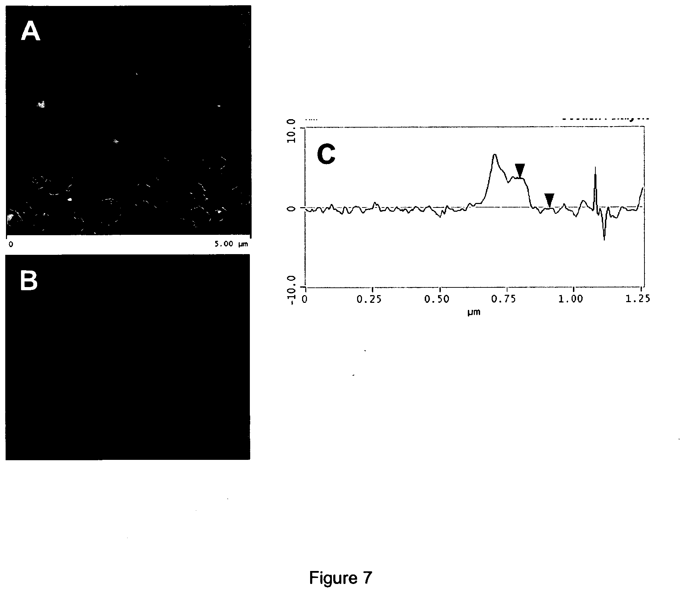

La figure 7 montre des images de microscopie à force atomique des FLG obenus par le procédé selon l'invention, dispersés sur un substrat à base de SiO$_2$/Si (A, B) et la hauteur des FLG mesuré par microscopie à force atomique (C). La hauteur moyenne est de 4 nm, ce qui représente un empilement de quatre couches de graphène. L'image (A) représente un carré de dimensions 5 $\mu$m x 5 $\mu$m. L'image (B) montre l'agrandissement de deux FLG.

**Description**

Lors de leurs recherches de procédés permettant de fabriquer du graphène sous la forme de feuillets d'épaisseur n'excédant pas d'une dizaine de couches et de préférence d'une ou de deux couches et ayant des dimensions de largeur et de longueur relativement importantes, les inventeurs ont trouvé une nouvelle méthode extrêmement simple et facilement industrialisable impliquant le frottement d'un matériau (appelé ici par la suite « M ») à base de graphite sur la surface d'un substrat (appelé ici par la suite « S »), de préférence plan, qui présente une certaine rugosité de surface, suivi d'un traitement par sonication dans un milieu liquide (appelé ici par la suite « L ») approprié.

Par cette méthode on peut obtenir des feuillets de graphène d'une épaisseur typique comprise entre 1 et 50 nm et présentant des plans graphitiques superposés selon l'axe vertical. Le nombre de feuilles de graphène parallèles est avantageusement compris entre 1 et 50, préférentiellement entre 1 et 30, et encore plus spécialement entre 1 et 15. Lesdites structures de graphène ont avantageusement une dimension dont la longueur et la largeur sont d'au moins 10 nm x 100 nm, préférentiellement d'au moins 50 nm et 500 nm, et encore plus préférentiellement d'au moins 100 nm x 5 $\mu$m.

Nous décrivons ici en détail les différentes étapes du procédé, ainsi que des modes de réalisation particuliers et des variantes du procédé. Dans la présente description, le terme « synthèse » ne se réfère pas à une synthèse du graphène par voie chimique mais désigne la fabrication du graphène à partir d'un matériau graphitique.

a) Matériau M à base de graphite et substrat S

Tout matériau massif à base de graphite M peut être utilisé dans le cadre du procédé selon l'invention. Il doit contenir une proportion significative de graphite, typiquement au moins 10% en masse, avantageusement au moins 30% en masse, et encore plus préférentiellement au moins 50% en masse. Le matériau M peut se présenter sous la forme géométrique d'une tige ou d'un bloc, de section cylindrique, rectangulaire, carrée, ou sous une autre forme appropriée. Nous utilisons par la suite pour ces formes géométriques de manière synonyme les termes « bloc » ou « barreau », même s'il s'agit d'un crayon. La dimension des blocs de matériaux M peut être variable selon les applications visées. Leur dureté peut être également variable.
Les matériaux M préférés sont les mines de crayon et les barreaux de graphite. Les mines de crayon comprennent un matériau à base de graphite et un liant minéral finement divisé dans des proportions variables. Les blocs ou barreaux de graphite peuvent être par exemple des blocs de graphite naturel ou des blocs obtenus par compactation (compression) de morceaux de graphite naturel, avec ou sans liant.

Le substrat S peut être conducteur ou, de préférence, non conducteur d'électricité. Il est avantageusement sélectionné parmi les matériaux à base de verre, tel que le verre rodé, de silice, de silicium recouvert ou non par une couche de passivation de SiO$_2$, ou de polymère d'une dureté appropriée. Sa rugosité de surface doit être adaptée à la dureté des matériaux M. De préférence, la rugosité R$_a$ est comprise entre 0,01 $\mu$m et 10 $\mu$m.

b) Dépôt de la trace (frottement)

Le procédé selon l'invention est basé sur l'ablation ou abrasion mécanique de feuillets de graphène par l'action d'une surface rugueuse d'un substrat S **2**, de préférence d'un substrat plan, sur un matériau M **5** à base de graphite. Cette ablation est réalisée en déposant, par un frottement impliquant un mouvement relatif entre le matériau M et la surface S se trouvant en contact mécanique, une trace dudit matériau M à base de graphite sur ladite surface S. Ainsi s'opère un transfert de matière du matériau M sur la surface S. Ce transfert conduit à une trace. Plusieurs mouvements de frottement peuvent être superposés pour former une seule trace. Ladite trace est normalement visible à l'oeil nu, sous la forme d'un trait gris-noir, comme lors de l'écriture avec une mine de crayon.

La surface S peut être sèche au cours du dépôt de la trace, mais dans ce cas il est plus difficile de décoller par la suite les feuillets de graphène déposées par ablation mécanique du matériau à base de graphite. Il est préféré que la surface S soit immergée dans un liquide lors du dépôt de la trace. Avantageusement, ladite surface S est soumise ensuite à un traitement par sonication afin de mieux décoller les traces de graphite déposées sur sa surface dans un milieu liquide L. Le traitement additionnel par sonication combiné à un frottement dudit matériau à base de graphite sur un substrat solide s'avère être une meilleure combinaison pour l'obtention des feuillets de graphène de faible épaisseur.

Il est avantageux de bien contrôler la force d'appui du matériau M sur la surface S. En particulier, il est avantageux que cette force soit faible, car cela favorise le dépôt de feuillets de graphène comportant un faible nombre de plans graphitiques. Mais elle doit être suffisante pour obtenir une production suffisante en feuillets de graphène. La corrélation entre la pression exercée le matériau M (par exemple une mine de crayon ou un barreau de graphite) et la résistance mesurée sur un capteur de pression est présentée sur la Figure 1. Le dispositif de mesure est présenté dans l'insert de la Figure 1.

La pression exercée est calculée par la formule suivante :

$$P = (M \times g)/S$$

avec :

P : pression en Pa
M : masse déposée sur la mine de crayon en kg
g : constante gravitationnelle en N. $kg^{-1}$
S : surface d'appui en $mm^2$

La résistance électrique est une fonction inverse de la pression exercée. Sur la figure 1, l'axe X représente la résistance mesurée (exprimée en kOhm), et l'axe Y représente la pression exercée (exprimée en Pascal). D'une manière générale, la pression peut être comprise entre 100 et 500 000 Pascal, de préférence entre 100 et 300 000 Pascal, mais dans certains modes de réalisation, on préfère que la pression soit comprise entre 100 Pa et 7000 Pa, de préférence entre 1000 Pa et 6000 Pa, et encore plus préférentiellement entre 2000 Pa et 5000 Pa.

c) Traitement par ultrasons (sonication)

Ce traitement est très important pour permettre de récupérer les FLG et dépôts sur la surface du substrat et aussi une séparation additionnelle des feuillets de graphite déposés sur le substrat entre eux. Il permet en outre d'obtenir une dispersion de graphène dans un milieu liquide L **6.** A cette fin, la surface S **2** qui porte la trace du matériau M **5** est traitée dans un bain dudit solvant (ou d'un autre solvant approprié) avec des ultrasons. Alternativement, le procédé d'ablation peut être effectué entièrement dans un bain à ultrasons, c'est-à-dire qu'au moment du dépôt de la trace du matériau M sur la surface S, ladite surface se trouve déjà immergée dans ledit solvant et est exposée aux ultrasons. La suspension contenant des FLG, du graphite résiduel et des liants peut être soutirée du bain lors de la synthèse et remplacée par un solvant propre. Après décantation et récupération des différentes phases solides présentes dans la suspension, le solvant peut être ré-injecté dans le bain d'ultrason.

Les FLG en suspension ainsi obtenu peuvent être re-traités, soit par un chauffage sous irradiation microondes soit par un traitement de sonication avec une puissance et / ou pendant une durée plus élevées, afin d'améliorer la séparation des feuillets de graphène constituant le FLG.

Sans vouloir être enfermés dans cette explication, les inventeurs s'imaginent que l'énergie fournie par la sonication permet de décoller les feuillets de graphène déposés sur la surface S et de disperser ces derniers dans le milieu liquide. On obtient ainsi une suspension de feuillets de graphène.

La nature du liquide L dans lequel la sonication a eu lieu est un facteur important dans le processus de fabrication. En effet, selon que le milieu liquide **6** soit protique ou aprotique la quantité de l'oxygène chimisorbé sur la surface des feuillets de graphène peut varier et induire des changements importants sur la conductivité du matériau final. La mouillabilité des feuillets de graphène par le solvant joue également un rôle important dans l'ablation des feuillets lors de la sonication. Le choix du solvant L influe sur le rendement du procédé : Les rendements obtenus par cette méthode varient typiquement entre 20 et 60 % en fonction du solvant utilisé.

Si le matériau M comporte des matériaux non graphitiques, une étape de décantation de la suspension obtenue peut être nécessaire. A titre d'exemple, si le matériau M est constitué d'une mine de crayon, on dépose une trace qui comprend également des résidus de liant, qui est présent en général sous la forme de poudres minérales (typiquement kaolin et bentonite) dont le taux peut varier de quelques pourcents à environ 30% dans le cas des mines de crayon HB. Lorsque la synthèse est réalisée dans un milieu aprotique une étape de purification supplémentaire peut être ajoutée au procédé : on y ajoute une quantité d'eau acidifiée connue dans la suspension et l'ensemble est mélangé pendant environ 1 heure. L'acide permet une dissolution au moins partielle des liants qui passent ainsi dans le milieu aqueux. Le mélange est décanté puis la phase aqueuse est séparée de la suspension organique contenant des FLG.

Dans un mode de réalisation particulier, ledit milieu liquide **6** est un milieu réducteur. Par exemple, il peut contenir des composés chimiques réducteurs appropriés, tels que $NaBH_4$ ou l'hydrazine ou l'ammoniac. Cela améliore la conductivité des feuillets de graphène (probablement par la réduction de groupements oxygénés à la surface ou sur la bordure des feuillets). Cela permet aussi de sélectivement maintenir en suspension dans le milieu liquide des feuillets de graphène de faible épaisseur, par exemple des feuillets mono-couches, bi-couches ou tri-couches, qui pourraient être utilisés ensuite dans les applications désirées.

Les FLG ainsi obtenus peuvent être également séchés après dépôt sur un substrat suivie d'une réduction sous un courant d'hydrogène afin d'éliminer les fonctions oxygénées de surface et d'augmenter la conductivité électrique. A titre d'exemple, la conductivité électrique mesurée sur une plaque de verre recouverte par une couche de FLG (de longueur de 16 mm et d'épaisseur d'environ 400 nm) était de 3 S. $m^{-1}$. Cette conductivité augmente d'une manière significative, 250 S. $m^{-1}$ au lieu de 3 S. $m^{-1}$, lorsque l'échantillon est réduit sous un courant d'hydrogène à 200°C pendant 2 h. La valeur de conductivité obtenue dans la présente demanderesse est relativement élevée par rapport à celle obtenue par Choucair et coil. (M. Choucair, P. Thordarson, J. A. Stride, Nature Nano. 4, 30-33 (2009)), à partir du graphène par solvolyse suivie d'une sonication de l'éthanolate de sodium avec des rendements assez élevés, qui est seulement que de 0,067 S. $m^{-1}$.

Dans un autre mode de réalisation du procédé selon l'invention, après l'exécution des étapes (a)(approvisionnement), (b) (frottement) et (c) (traitement aux ultrasons en milieu liquide), on sépare l'ensemble de la matière solide en suspension, par exemple par filtration. Cette matière solide contient notamment le graphène et les éventuel liants du matériau M à base de graphite. Ensuite, on re-disperse cette matière solide dans un volume d'eau dé-inonisée. Cette dispersion est traitée par une solution acide, de préférence chlorhydrique, afin de dissoudre une partie des liants et impuretés solubles. Un traitement avec de l'acide chlorhydrique à 37% volumiques à 80°C pendant 1 heure convient. Ensuite, on sépare le résidu solide, on le lave à l'eau dé-ionisée et on le redisperse dans de l'eau dé-ionisée, qu'on traite avec une solution basique. Le solide séparé est redispersé dans un volume d'eau dé-ionisée puis soumis à un traitement d'ultrasons, par exemple d'une heure. On laisse décanter, de préférence à la température ambiante pendant une heure, puis on prélève le graphène. Le graphène ainsi obtenu peut être garde en dispersion, ou il peut être séparé, par exemple par filtration, pour être soit redispersé dans un autre solvant, soit stocké sous la forme d'une poudre, à l'air ou, de préférence, sous une atmosphère contrôlée.

Les analyses thermogravimétriques (ATG) réalisées sur le graphène récupéré de la suspension indiquent une concentration d'impuretés non combustibles significative, pouvant atteindre 30 % en poids du matériau M à base de graphène. Ce résultat est d'autant plus étonnant que le taux d'impuretés (liants et autres) dans le crayon utilisé comme matériau M de départ, obtenu par combustion à 1000°C, n'est que de 15 %. Sans vouloir s'enfermer dans une explication scientifique pour expliquer ces résultats, les inventeurs avancent l'hypothèse suivante : lors de l'exfoliation par traitement aux ultrasons, les feuillets de graphène formés développent une surface d'adsorption plus importante que celle du matériau M à bas de graphite ; de même, le traitement d'ultrasons pourrait créer de nouveaux défauts de surface, qui constituent des nouveaux sites d'adsorption pour les impuretés. Ceci peut expliquer la forte augmentation du taux d'impuretés par poids de graphène observée par ATG.

Les inventeurs ont trouvé que pour certaines applications telles que la catalyse ou le renforcement de matériaux, la présence de telles impuretés ne pose pas nécessairement de problème. Pour des applications visant le domaine de l'électronique ou des polymères conducteurs, la présence d'impuretés peut cependant influer sur la conductivité électrique et thermique du matériau obtenu. Dans ces cas, il est avantageux de purifier le produit pour éliminer ces impuretés. Cette purification peut être réalisé selon toute méthode appropriée. Deux méthodes qui conviennent sont indiquées ici :

(i) dans le cas où les liants sont à base de kaolin : un traitement avec de l'acide fluorhydrique dilué (2 à 5 %) ;
(ii) (ii) dans le cas où les liants sont à base d'alumine ou de silice : un traitement avec de la soude (20 %) à 80°C.

On obtient ainsi une dispersion de graphène purifiée, qui convient à toutes les applications ; en cas de besoin, on peut séparer le graphène de la phase liquide pour l'obtenir sous une forme de poudre.

d) <u>Dépôt de traces de graphène sur un substrat selon un schéma prédéfini</u>

Dans une variante du procédé selon l'invention, on dépose, par frottement avec un matériau à base de graphite, des traces de matériau M sur la surface S d'un substrat, de préférence d'un substrat non conducteur, selon un schéma géométrique déterminé à l'avance. Ainsi, on peut former des traces conductrices sur un support solide ou flexible, possiblement transparent. Ainsi, on peut préparer des substrats pour des dispositifs électroniques, lesdites traces formant des circuits électriques ou des parties de circuits électriques, par exemple en vue du dépôt ultérieur de couches minces ; de tels dispositifs peuvent être utilisés dans des applications photovoltaïques. Dans un mode de réalisation on réalise ainsi des électrodes flexibles et transparentes par dépôt de traces de matériau M sur un polymère flexible et transparent. Cette opération de dépôt peut être suivie par une sonication du substrat afin de ne préserver que le nombre de feuillets de graphène nécessaire pour la réalisation du circuit désiré.

e) Rendement du procédé

Le rendement du procédé de fabrication de particules ou feuillets de graphène est avantageusement supérieur à 3 % massiques par rapport à la masse du matériau M de départ consommé, préférentiellement supérieur à 10 % et avantageusement supérieur à 40 %. Ces valeurs de rendement correspondent à la masse de feuillets de graphène par rapport à la perte de masse du matériau M. Si l'on se réfère uniquement à la masse de matériau graphitique du matériau M, sans tenir compte des matériaux non-graphitiques qu'il peut contenir, ce rendement peut même atteindre 60%. A la connaissance des inventeurs, aucun procédé de préparation de graphène connu ne permet d'atteindre un rendement aussi élevé sans avoir eu recours à l'utilisation d'une synthèse chimique.

e) Utilisation et avantages du procédé selon l'invention

Le procédé selon l'invention présente de nombreux avantages. D'une manière générale, il conduit à du graphène multi-couches, dont le nombre de feuillets ne dépasse pas une vingtaine de feuillets, qui sont faciles à séparer du substrat par simple sonication dans un milieu liquide approprié. Il permet de préparer une dispersion de feuillets de graphène dans un milieu liquide dont la nature peut être ajustée en fonction des applications visées. Ainsi, le graphène multi-couche se trouve en dispersion dans le milieu liquide et peut être utilisé ensuite dans différents procédés, tels que des procédés de fabrication de matériaux composites soit par dépôt direct sur un substrat soit par mélange avec un autre produit approprié, par exemple en vue de la fabrication du composite final.

La présente invention se distingue des procédés existants, tels que le frottement d'une mine de crayon ou d'un barreau de graphite sur un substrat à base de feuille de papier ou de silicium, par le fait qu'elle fait recours d'une part à un substrat, de préférence rigide, dont la rugosité est contrôlée, et à une sonication intermédiaire ou simultanée afin de décoller les feuillets de graphène déposés sur la surface **2** du substrat dans un milieu liquide **6**. Le procédé permet de synthétiser en continu des feuillets de graphène ; il possède des paramètres ajustables (notamment la force de frottement, la vitesse latérale de frottement, la rugosité du substrat, la puissance de sonication, la nature chimique du milieu liquide) qui permettent d'optimiser le produit obtenu.

La figure 6 montre un premier mode de réalisation d'un appareil continu. Avantageusement, le matériau graphitique **5** est un barreau de graphite, et le substrat **2** est une plaque de verre rugueuse avec une rugosité moyenne de l'ordre de 1 $\mu$m mesurée par profilométrie. Dans ce mode de réalisation, le substrat **2** est motorisé et se déplace latéralement par rapport au barreau de graphite **5** pour déposer la trace, mais on peut aussi réaliser dans le cadre de la présente invention un appareil dans lequel le barreau de graphite se déplace latéralement par rapport au substrat. Ledit déplacement du substrat **2** par rapport au barreau de graphite **5** s'effectue grâce à un moyen de déplacement latéral tel qu'un servomoteur. Dans une variante de ce procédé, ledit déplacement latéral est une révolution en continue soit du substrat **2** soit du barreau **5**, avec un incrément latéral permettant d'obtenir une trace continue en forme de spirale ou autre.

Dans un mode de réalisation avantageux, la surface **2** sur laquelle est déposée la trace est immergée dans un bain à ultrasons comportant une phase liquide L pendant le dépôt de ladite trace.

Quelques modes de réalisation du frottement du matériau graphitique sur la surface **2** du substrat solide sont décrites en plus grand détail ci-dessous :

Dans un premier mode de réalisation, on effectue un frottement circulaire du matériau M **5** avec des diamètres différents sur ladite surface **2** du substrat solide. Dans cette variante le matériau graphitique est fixe selon le plan XY défini par le substrat plan et seul le déplacement en Z (perpendiculaire à la surface du substrat solide) est effectif au fur et à mesure que la matière graphitique a été consommée. Avantageusement, la force d'appui entre le matériau graphitique M et la surface du substrat **2** est contrôlée tout au long du procédé.

Dans un second mode de réalisation, on effectue un frottement circulaire avec une modulation de l'amplitude du matériau graphitique selon le plan XY. Le déplacement du matériau graphitique selon l'axe Z est maintenu comme dans le mode de réalisation précédent. Le mouvement du matériau graphitique selon le plan XY peut être vertical ou pendulaire.

Le rendement et la qualité des FLG obtenus peuvent être contrôlés par le biais des paramètres suivants : la vitesse de rotation du substrat rugueux, la pression exercée par le matériau graphitique sur la surface du substrat, la dureté du matériau graphitique, la puissance du générateur d'ultrason **7**, la nature du milieu liquide **6** dans lequel l'extraction des FLG a eu lieu.

Le liquide ainsi chargé de FLG, des débris graphitiques et des liants est évacué périodiquement ou en continu afin d'effectuer la séparation des FLG. Dans le cas où le liquide **6** est un solvant organique, une partie des liants, kaolin et bentonite, peut être séparée de la suspension par addition d'eau ou d'acide qui favorise la dissolution des liants dans le milieu aqueux avant la séparation et décantation pour récupérer les FLG. La suspension contenant des FLG ainsi séparée des liants peut être concentrée ensuite par des moyens donc disposent l'homme du métier, tels que l'évaporation sous vide avec un chauffage ou non, centrifugation. Le liquide débarrassé des FLG peut être recyclé ensuite dans le bain d'ultrason. Dans le cas de l'utilisation d'un solvant aqueux les liants peuvent être séparés par dissolution dans le milieu par ajout de l'acide puis on procède ensuite à une centrifugation afin de récupérer les FLG pour une utilisation ultérieure.

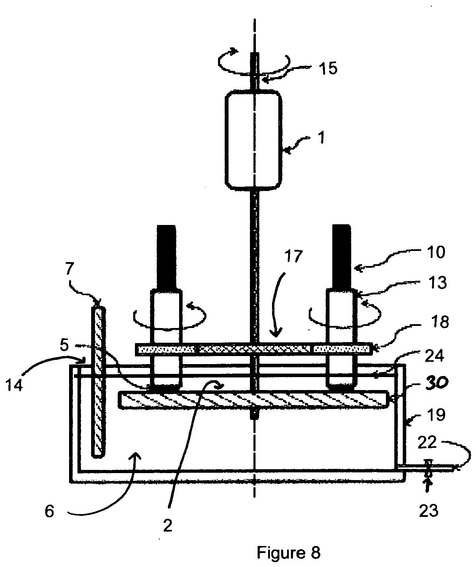

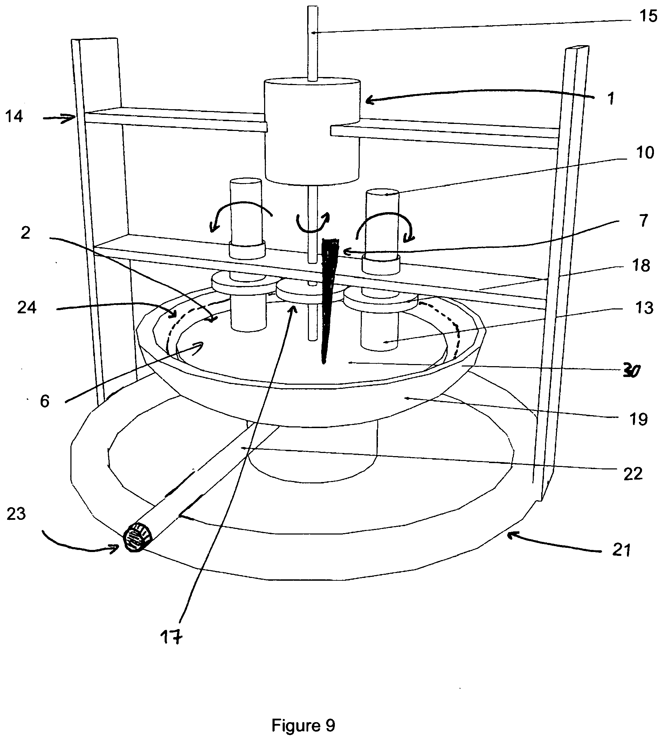

Les figures 8 et 9 montrent d'autres dispositifs pour mettre en oeuvre le procédé selon l'invention ; la figure 8 représente le mode de réalisation préféré. Le dispositif comporte un ou plusieurs blocs, barreaux ou tiges en matériau à base de graphite **5**, disposés à l'intérieur d'au moins un tube **13**, de préférence de forme cylindrique, maintenu dans un cadre **14** de manière à pouvoir tourner autour de son axe long. Sur ledit matériau à base de graphite **5** est exercé une force contrôlée vers le bas ; il peut par exemple être lesté par un poids **10**. La surface inférieure dudit matériau à base de graphite **5** frotte sur la surface abrasive **2** d'un disque **30,** qui effectue un mouvement de rotation autour d'un axe **15**, mu par un moteur **1**, qui peut être fixé sur le cadre **14**. A cette fin, on peut prévoir des éléments de transmission **17,18** sur l'axe **15** et le tube **13** qui coopèrent pour faire tourner le tube **13** dans la direction souhaitée. Lesdits éléments de transmission **17,18** peuvent comprendre des éléments qui coopèrent par un simple contact de pression (par exemple des joints toriques en matériaux polymérique), ou des éléments formant un engrenage.

Le disque **2** peut être circulaire, et l'axe **15** peut passer par son centre. L'axe **15** peut aussi être excentré, et/ou le disque peut avoir une forme autre que circulaire, et dans ces cas, on agrandit la fraction de la surface abrasive du disque **2** sur laquelle frotte le matériau à base de graphite **5**. Le disque **2** se trouve dans un récipient **19** (tel qu'une vasque) qui contient la phase liquide **6**, de manière à ce que la surface supérieure du disque **2** soit immergée dans ledit liquide **6**. Un générateur d'ultrasons **7** transmet au liquide **6** de l'énergie mécanique à une fréquence ultrasonique. A titre d'exemple, ledit générateur d'ultrasons **7** peut être un élément tubulaire (« crayon » ou « doigt » d'ultrasons), dont le bout trempe dans la phase liquide **6**, ou il peut être disposé dans la base **20** du récipient **19**. Le récipient **19** peut être doté d'un support **21,** par exemple de forme annulaire, pour conférer au dispositif une bonne stabilité (figure 9).

Dans une variante (non montrée sur les figures) de ce mode de réalisation, le moteur **1** se trouve au-dessous du disque **2**, par exemple dans la base **20** du récipient **19** ; il faut alors assurer une étanchéité correcte entre l'axe **15** et le récipient **19**. Avantageusement, le récipient **19** est doté d'un moyen de vidange **22**, qui peut être un tuyau, et qui est avantageusement doté d'un moyen de régulation de débit **23**, tel qu'une vanne ; ce moyen de régulation de débit **23** peut être un moyen à pilotage automatique, pour faciliter l'exploitation du procédé en continu ; il permet avantageusement une fermeture complète (débit zéro). On peut prévoir un dispositif de remplissage (non montré sur les figures), qui permet de renouveler la phase liquide **6** au fur et à mesure qu'elle est prélevée en bas du récipient **19** à travers le moyen de vidange **22** ; ainsi on peut, périodiquement ou en permanence, prélever du liquide **6** pour récolter la dispersion de graphène, tout en gardant constant le niveau **24** de liquide **6** dans le récipient **19**. Les composants du dispositif peuvent être en tout matériau approprié, par exemple métallique, vitreux, ou polymérique.

Ladite phase liquide **6** peut comporter un agent réducteur.

Dans un mode de réalisation, on a fait tourner le disque **2** avec une vitesse comprise entre 40 et 100 tours par minute, et de manière plus préférée entre 40 et 60 tours par minute. La force exercée sur le matériau à base de graphite **5** était de 2,5 bars, et sa vitesse de rotation était comprise entre 3 000 et 10 000 tours par minute, de préférence 5000.

Le procédé selon l'invention permet de déposer directement sur un substrat donné des feuillets de graphène avec un nombre de couches prédéfini, en sélectionnant une force d'appui appropriée lors de l'amincissement mécanique, par exemple en utilisant un potentiomètre régulant la force d'appui et la vitesse de frottement du matériau sur la surface du substrat, ou par l'intermédiaire d'un cantilever d'un microscope à force atomique donc l'un des exemples ci-dessous illustre la faisabilité. Dans ce dernier mode de réalisation, on fixer une pointe de matériau à base de graphite M sur la pointe ou au cantilever d'un microscope à force atomique, et on dessine directement des circuits conducteurs à base de graphène sur des substrats tels que le verre, le silicium recouvert par une couche mince de silice, ou des polymères. On peut également créer une surface complètement recouverte par des feuillets de graphène par frottement d'un barreau de graphite de dimension adaptée sur la surface d'un substrat. Ce substrat peut être à base de matériaux divers, e.g. silice, silicium, verre, ou de polymères, de rugosité appropriée.

Une méthode utilisant les techniques de l'imprimante électronique peut également être utilisée afin de préparer des films minces contenant des FLG. Dans ce cas, les FLG sont mélangés avec un autre composé, tel qu'un polymère approprié, et ce mélange est déposé ensuite sur un substrat, de préférence plan, sous la forme d'un film ou toute autre forme géométrique qu'autorise le procédé. En cas de besoin, une sonication permet d'éliminer les couches excédentaires dans le milieu liquide qui pourraient être utilisées ensuite dans d'autres applications.

Le procédé selon l'invention permet également d'améliorer le rendement de graphène, et notamment en partant des matériaux de base peu coûteux et industriellement disponibles, tels que les mines de crayon ou les barreaux de graphite ; les procédés de fabrication de ces matériaux de base sont bien maitrisés par les fabricants et peuvent, en cas de besoin, être adaptés aux besoins spécifiques du procédé selon l'invention, par exemple quant aux dimensions et à la dureté des pièces de matériaux. En particulier, le procédé de fabrication de feuillets de graphène selon l'invention permet d'obtenir des rendements importants, de l'ordre de 2 à 60% et plus généralement compris entre 10 et 40 %.

Le procédé selon l'invention peut être réalisé sans aucun besoin de chauffage externe ou d'ajout de composés chimiques toxiques comparé à d'autres procédés de l'état de la technique. De plus, le procédé selon l'invention est très facile à industrialiser, chaque étape faisant appel à des techniques connues et simples.

Les FLG ainsi obtenus peuvent être utilisés directement en tant que suspension, telle quelle ou après concentration par des techniques connues de l'homme du métier. En particulier, ils peuvent être utilisés dans la fabrication des composites polymériques, comme décrit dans les exemples qui suivent, ou dans la fabrication des circuits électroniques.

A titre d'exemple, on peut disperser la dispersion obtenue, éventuellement après concentration (par exemple par évaporation de solvant), dans une autre solution contenant des polymères. Il peut s'agir de polymères dispersables en milieu aqueux (tel que le latex) ou non aqueux. Après dispersion et homogénéisation du mélange de polymère (éventuellement en chauffant), on le met en forme pour obtenir un produit en polymère. Les inventeurs ont trouvé qu'il peut être avantageux d'ajouter à la dispersion de graphène des nanotubes ou nanofibres de carbone.

Dans un autre mode de réalisation, on fabrique des circuits électroniques par injection microscopique de la dispersion (avantageusement concentrée) par l'intermédiaire d'une buse d'injection, ou par dépôt sur un circuit masqué suivi d'un traitement thermique pour stabiliser le dépôt et un traitement chimique pour enlever le masque de protection dudit circuit.

**Exemples**

Les exemples présentés ci-dessous ont pour but d'illustrer des modes de réalisation de l'invention. Ils ne limitent pas la portée de l'invention.

Exemple 1 : Synthèse de feuillets de graphène par frottement d'une mine de crayon sur une surface rugueuse suivie d'une sonication/réduction dans du toluène

Dans cet exemple les feuillets de graphène multicouche (ou FLG) ont été générés par frottement d'une mine de crayon (dureté HB avec une surface de frottement d'environ 1 mm$^2$) sur une surface de verre rodé ayant une rugosité d'environ 1 $\mu$m. La rugosité de la surface du verre a été mesurée par profilométrie et la valeur donnée est une valeur moyenne obtenue sur une distance de 2 mm. Après frottement le verre a été soniqué (puissance de 40 Watt) dans une solution de toluène afin de décoller les feuillets de graphène faiblement ancrés sur sa surface. L'opération a été répétée plusieurs fois afin d'obtenir une quantité de graphite ou de carbone de l'ordre de 100 mg dans une solution de 100 mL de toluène. La réduction des feuillets de graphène a été réalisée en ajoutant à la solution 300 mg de NaBH$_4$. La suspension a été maintenue ensuite sous agitation (400 tours/minute) pendant 30 minutes afin de compléter la réduction. La suspension a été laissée décanter pendant 60 minutes et la solution claire surnageante a été prélevée pour analyse. La purification de l'excès de NaBH$_4$ et des liants présent dans le matériau de départ a été est réalisée par transfert de phase avec une solution aqueuse d'acide suivie d'une séparation des deux phases par les techniques connues de l'homme du métier.

Les feuillets ainsi obtenus ont été examinés par microscopie électronique à transmission (MET) couplée avec une diffraction d'électrons. Cette technique combinée permet de déterminer avec exactitude si le nombre de feuillets constituant le FLG, obtenu par cette méthode, est de un, deux ou trois ou plus. Les images représentatives du FLG obtenu par la présente méthode sont présentées sur la Fig. 2. L'image à basse résolution permet de dire que le graphène multi-couche formé a une dimension moyenne allant de 2 à plus de dix micromètres (Fig. 2A). La diffraction des électrons réalisée sur les feuillets de graphène montre la présence de tâches de diffraction d'un réseau hexagonal correspondant à la structure du graphite. L'image à moyenne résolution (Fig. 2B) montre que le matériau est constitué par des assemblages de feuillets de graphène de plus petite taille, e.g. de l'ordre de quelques centaines de nanomètres. L'image MET à haute résolution réalisée sur le bord des feuillets indique que le nombre de couches est de quatre et huit respectivement (Fig. 2C).

Exemple 2 : Synthèse de feuillets de graphène multi-couche par frottement d'une mine de crayon sur une surface rugueuse suivie d'une sonication dans une solution de toluène. Influence de la durée de décantation

Dans cet exemple les feuillets de graphène multicouche (ou FLG) ont été générés par frottement d'une mine de crayon (dureté HB) sur une surface de verre rodé ayant une rugosité de 1 μm (valeur moyenne sur une distance de 2 cm). La rugosité de la surface du verre a été mesurée par profilométrie. Après frottement le verre a été soniqué (puissance de 40 Watt) dans une solution de toluène afin de décoller les feuillets de graphène faiblement ancrés sur sa surface. L'opération a été répétée plusieurs fois afin d'obtenir une quantité de graphite ou de carbone de l'ordre de 100 mg dans 100 mL de toluène. La suspension a été soumise ensuite à une sonication avec une plus forte puissance (250 Watts) pendant quinze minutes afin de mieux séparer les feuillets de graphène faiblement collés entre eux. La suspension après sonication a été laissée ensuite décanter et des prélèvements à différents intervalles ont été effectués afin d'analyser la qualité des feuillets de graphène obtenus et le rendement.

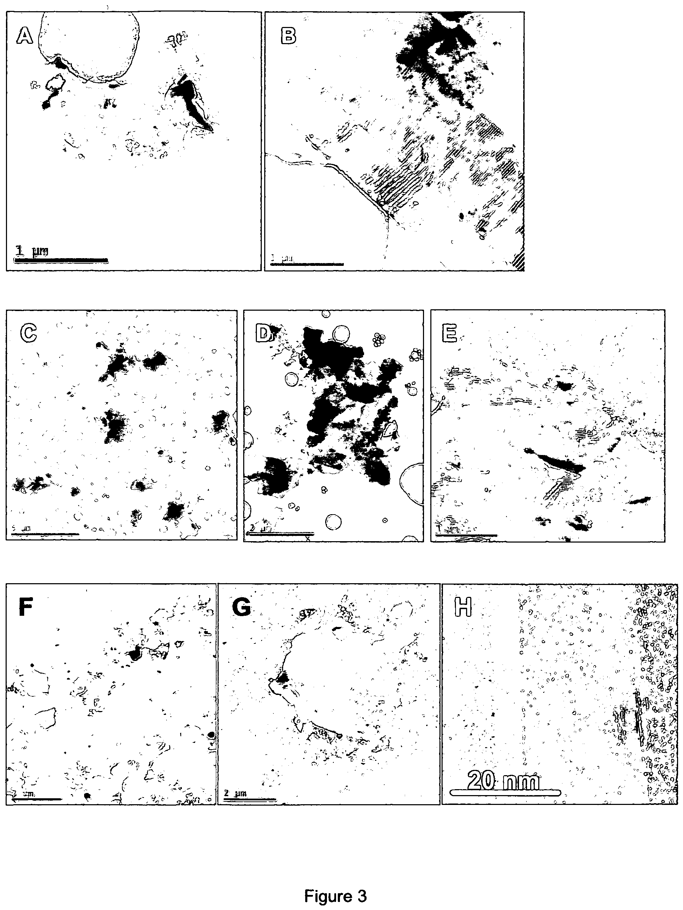

Les feuillets ainsi obtenus en fonction de la durée de décantation ont été examinés par microscopie électronique à transmission (MET). Les images représentatives du graphène obtenu avec différents intervalles de temps de décantation sont présentées sur la Fig. 3. L'échantillon récupéré après 5 minutes de décantation était constitué par des feuillets de dimension moyenne de l'ordre de 2 à 5 μm (Fig. 3A). Une image MET avec une résolution moyenne (Fig. 3B) montre que les feuillets sont un mélange de feuillets de différentes épaisseurs allant de deux, trois à plusieurs dizaines de couches. Une décantation plus longue (20 minutes au lieu de 5 minutes) a permis d'éliminer les feuillets contenant plusieurs dizaines de couches (Figs. 3C à F). Cependant, les feuillets de graphène restent encore relativement épais, e.g. deux, trois à plus d'une vingtaine de couches. Une décantation pendant 40 minutes a permis de récupérer les feuillets de graphène dont l'épaisseur est relativement faible, allant de deux, trois à autour d'une quinzaine de couches au maximum (Figs. 3F à H). La taille des feuillets reste à peu près similaire en fonction de la durée de décantation, environ 2 à 5 μm.

Exemple 3 : Synthèse de feuillets de graphène mono et bi-couche par frottement d'une mine de crayon sur une surface rug euse suivie d'une sonication / réduction dans un mélange éthanol : toluène contenant du NaBH$_4$.

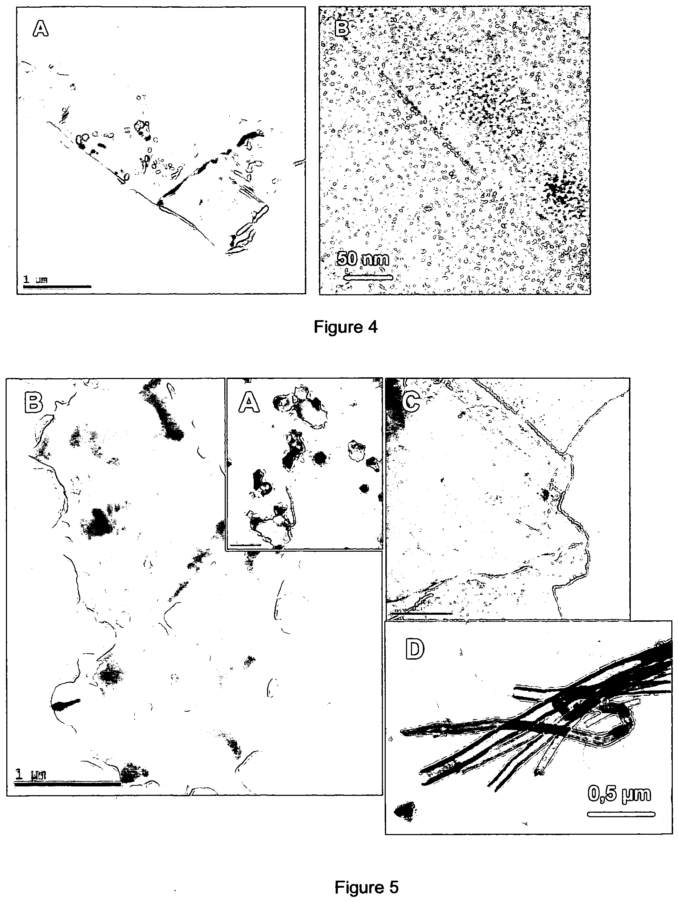

Dans cet exemple les feuillets de graphène multicouche (ou FLG) ont été générés par frottement d'une mine de crayon (dureté HB) sur une surface de verre rodé ayant une rugosité de 1 μm. La rugosité de la surface du verre a été mesurée par profilométrie et la valeur donnée est une valeur moyenne obtenue sur une distance de 2 mm. Après frottement le verre a été soniqué (puissance de 40 Watt) dans une solution d'éthanol/toluène (50 : 50 vol : vol) contenant 4 % en poids de NaBH$_4$ (ce dernier jouant le rôle d'agent réducteur), pendant une période de cinq minutes afin de décoller les feuillets de graphène faiblement ancrés sur sa surface. L'opération a été répétée plusieurs fois afin d'obtenir une quantité de feuillets de graphène de l'ordre de 100 mg. Les feuillets ainsi obtenus ont été examinés par microscopie électronique à transmission (MET) couplée avec une diffraction des électrons. Cette technique combinée permet de déterminer avec exactitude si le nombre de feuillets constitués le graphène, obtenu par cette méthode, est de un, de deux ou de trois ou plus. Les images représentatives du graphène obtenu par la présente méthode sont présentées sur la Fig. 4. L'image à basse résolution permet de dire que le graphène formé a une dimension moyenne allant de 2 à plus de dix micromètres (Fig. 4A). L'image à haute résolution (fig. 4B) montre que le matériau FLG est constitué par deux couches de graphène.

L'épaisseur des feuillets de graphène a été également caractérisée par microscopie à force atomique (AFM). Les images obtenues par AFM sont présentées sur la figure 8. Les analyses statistiques indiquent que les feuillets de graphène obtenu ont une épaisseur moyenne entre 2 et 8 nm.

Exemple 4 : Synthèse de feuillets de graphène par frottement d'une mine de crayon sur une surface rugueuse suivie d'une sonication / réduction dans un milieu éthanolique

La synthèse des feuillets de graphène dans cet exemple a été réalisée selon le même principe que celui déjà décrit dans l'Exemple 1 ; le milieu liquide était de l'éthanol pur. Après synthèse, le milieu liquide éthanolique contenant des feuillets de graphène et des résidus carbonés a été chauffé à 80°C pendant 30 minutes. Après refroidissement et décantation, les sédiments étaient essentiellement constitués de fragments de graphite de grande épaisseur alors que les feuillets de graphène de faible épaisseur se trouvaient en suspension dans le liquide surnageant.

L'observation par MET à faible résolution montre que les feuillets ont une taille moyenne d'environ 2 à 6 μm (Figs. 5A et B). On observe également dans cette image la présence de nanofeuilles de carbone. L'image MET à moyenne résolution montre que les feuillets de graphène formés ont une tendance de s'enrouler comme le montre la présence de plis sur le feuillet (Fig. 5C). Les analyses par MET montrent que par ce traitement une partie des feuillets de graphène formés sont enroulés sur eux-mêmes pour former des nanofeuilles de carbone avec un canal central ouvert (Fig. 5D). On peut penser que lors du traitement thermique dans l'éthanol une partie des feuillets de graphène formés se sont enroulés sur eux-mêmes pour former des nanorouleaux de carbone. Ce phénomène n'a pas été observé dans le cas des feuillets dispersés dans un milieu à base de toluène.

Exemple 5 : Rendement en graphène par frottement d'une mine de crayon sur une surface rugueuse suivie d'une sonication dans du toluène ou dans l'eau

La synthèse a été réalisée comme dans l'Exemple 1. La mine de crayon avait une surface effective (i.e. une surface de frottement) d'environ 1 mm$^2$. Le verre avait une rugosité de 5 $\mu$m et offrait une surface de frottement de 15 cm$^2$. La concentration de graphite ou de carbone dans la solution de toluène était de 200 mg. L$^{-1}$. La suspension a été soumise ensuite à une sonication avec une puissance de 250 Watt. La durée de la deuxième sonication était variable. Le sonicateur utilisé dans ce cas était du type sonicateur à sonde. La suspension a été laissée décanter ensuite à température ambiante pendant 1 h puis la suspension claire surnageante a été prélevée. Cette suspension a été évaporée à 120°C dans un four afin de récupérer le solide noir constitué par les feuillets de graphène. Le rendement a été alors calculé selon la formule suivante :

$$(M_{solide\ récupéré}/M_{graphite/carbone\ dans\ la\ suspension}) \times 100$$

Les rendements en graphène variaient en fonction de la durée de la décantation de la suspension et aussi en fonction de la nature du solvant utilisé (Tableau 1).

Tableau 1

| A) Sonication dans du toluène | | | |
|---|---|---|---|
| Durée de la décantation [min] | 5 | 20 | 40 |
| Masse totale [mg de graphite/100 ml de toluène] | 78 | 78 | 78 |
| Masse récupérée après décantation [mg de graphène/100 ml de toluène] | 43 | 34 | 29 |
| Rendement [%] | 56 | 44 | 37 |
| B) Sonication dans l'eau | | | |
| Durée de la décantation (min) | 5 | 20 | 40 |
| Masse totale [mg de graphite/100 ml d'eau] | 92 | 92 | 92 |
| Masse récupérée après décantation [mg de graphène/100 ml d'eau] | 37 | 19 | 16 |
| Rendement [%] | 40 | 21 | 17 |

Exemple 6 : Synthèse du graphène par frottement d'une mine de crayon sur une surface rugeuse suivie d'une sonication dans l'eau

La synthèse a été réalisée selon l'Exemple 1, mais cette fois, la solution de toluène a été remplacée par de l'eau distillée. La dispersion de graphène dans l'eau a été soumise ensuite à une sonication avec une puissance plus importante, 250 Watts au lieu de 40 Watts, pendant 15 minutes afin de disperser les feuillets de graphène qui sont encore faiblement assemblés les uns aux autres. Le mélange a été laissé décanter ensuite et les analyses ont été effectuées sur les prélèvements en fonction du temps de décantation.

Les rendements associés ont été calculés par évaporation complète de la solution dans un étuve à 100°C. Le rendement total par rapport à la quantité de graphite extraite, déterminée après une décantation de 20 minutes, était de l'ordre de 20 %. Les feuillets de graphène multi-couches obtenus contenaient en général moins de vingt feuillets et avaient une dimension moyenne de l'ordre de plusieurs micromètres.

Exemple 7 : Synthèse d'un composite de graphène multi-couche/nanotubes de carbone en vue de son utilisation comme additif dans la fabrication des polymères conducteurs

La synthèse du graphène a été réalisée selon l'un des exemples décrits ci-dessus. La suspension contenant des feuillets de graphène a été prélevée de la solution après sonication et décantation. On y a ajouté 1 g de nanotubes de carbone multi-feuillets (diamètre moyen de 100 nm et une longueur moyenne de 2 mm), préalablement soniqués dans 100 mL de toluène. Le mélange ainsi obtenu a été soumis ensuite à une sonication (250 Watts) pendant 30 minutes puis laissé décanter à température ambiante pendant une heure. Le mélange a été chauffé ensuite à 100°C dans une étuve afin d'évaporer en parti le solvant. La suspension après évaporation d'une partie du liquide est redispersée ensuite dans une autre solution contenant des polymères dispersables en milieu aqueux tel que le Latex. Après homogénéisation le mélange Latex-FLG est déposé ensuite par les techniques connues de l'homme du métier sur un substrat plan en vue des applications ultérieures. On peut également chauffer le substrat après dépôt du mélange afin de former le composite désiré.

Exemple 8: Gravure d'un circuit par dépôt d'une couche de graphène par l'intermédiaire d'une pointe de graphite attachée à un cantilever d'un microscope à force atomique

Le circuit a été réalisé par dépôt des lignes de graphène par l'intermédiaire d'une pointe de mine de crayon (ou une autre pointe suffisamment fine en matériau à base de graphite) attachée sur un cantilever d'un microscope à force atomique (AFM), ledit cantilever étant relié à un dispositif piézoélectrique qui permet un déplacement contrôlé de la pointe dans les trois directions de l'espace. Le dépôt a été réalisé par mode de contact entre la pointe et le substrat, ici du silicium recouvert par une couche mince de silice. Le dépôt a été observé ensuite par une pointe classique du microscope à force atomique. On constate que le dépôt est assez régulier selon le modèle défini. L'épaisseur de la couche de graphène déposée mesurée était d'environ 2 nm (équivalence à deux feuillets de graphène) et elle était homogène sur toute la longueur du dépôt. Cet exemple montre bien qu'il est possible de dessiner un circuit nanoscopique à base de graphène sur des substrats en utilisant la force de gravage d'une pointe du microscope à force atomique. En faisant varier les conditions de frottement entre la pointe et le substrat, on obtient une couche d'une épaisseur comprise entre 1 nm et 10 nm.

## Revendications

1. Procédé de fabrication d'une dispersion de particules ou feuillets de graphène dans un milieu liquide L, comprenant les étapes suivantes :

   (a) on approvisionne un barreau ou bloc (5) de matériau massif M à base de graphite, ledit matériau à base de graphite étant de préférence choisi parmi les mines de crayon, le graphite naturel, le graphite synthétique;
   (b) on frotte ledit matériau M sur la surface S (2) d'un substrat de manière à créer une trace de frottement dudit matériau M sur ladite surface S (2) dudit substrat, sachant que la vitesse de frottement entre ledit matériau M (5) et ladite surface S (2) est comprise entre 0,001 m s$^{-1}$ et 0,1 m s$^{-1}$, et / ou ladite surface (2) dudit substrat a une rugosité comprise entre 0,01 $\mu$m et 10 $\mu$m ;
   (c) on trempe ledit substrat dans un milieu liquide L (6) et soumet ledit milieu liquide L (6) aux ultrasons pour obtenir une dispersion de particules ou feuillets de graphène dans ledit milieu liquide L (6),

   sachant que les étapes (b) et (c) peuvent être réalisées au moins en partie successivement, ou en même temps.

2. Procédé selon la revendication 1, dans lequel ladite phase liquide L (6) est un milieu réducteur, et comporte avantageusement un agent réducteur sélectionné dans le groupe constitué par : le NaBH$_4$, l'hydrazine, l'ammoniac.

3. Procédé selon les revendications 1 ou 2, **caractérisé en ce qu'**il comporte en plus une étape (d) dans laquelle on sépare d'éventuelles matières organiques ou minérales présentes dans ladite dispersion, de préférence par décantation ou centrifugation, ou par dissolution chimique.

4. Procédé selon l'une quelconque des revendications 1 à 3, **caractérisé en ce qu'**il comporte en plus une étape (e) dans laquelle on appauvrit ladite dispersion en particules graphitiques et/ou des feuillets de graphène trop épais éventuellement présents dans ladite dispersion, de préférence par décantation ou par centrifugation.

5. Procédé selon l'une quelconque des revendications 1 à 4, **caractérisé en ce qu'**il comporte en plus une étape dans laquelle on récupère à partir de ladite suspension les feuillets de graphène, et une étape de redispersion desdits feuillets de graphène dans une phase liquide.

6. Procédé selon l'une quelconque des revendications 1 à 5, **caractérisé en ce que** l'épaisseur desdits particules ou feuillets de graphène est comprise entre 1 et 50 nm et/ou le nombre de feuilles de graphène parallèles est compris enter 1 et 50, préférentiellement entre 1 et 30 et encore plus préférentiellement entre 1 et 15.

7. Procédé selon l'une quelconque des revendications 1 à 6, **caractérisé en ce que** ledit substrat est sélectionné parmi les polymères, de préférence les polymères flexibles et/ou transparents, les verres, les céramiques, le silicium.

8.  Procédé selon l'une des revendications 1 à 7, dans lequel ladite surface S (2) dudit substrat et ledit matériau massif M (5) sont en mouvement relatif selon au moins deux axes, de manière à provoquer un décalage latéral entre deux segments adjacents de traces dudit matériau M (5) sur ladite surface S (2).

9.  Procédé selon la revendication 8, dans lequel ledit substrat est un disque capable de tourner autour de son axe, et dans lequel la trace de frottement dudit matériau massif M (5) sur ladite surface (2) est décalée en continue ou périodiquement à l'aide d'un moyen de déplacement latéral (9) de manière à obtenir une trace continue, de préférence sous la forme d'une spirale.

10. Procédé selon l'une des revendications 1 à 9, dans lequel les étapes (b) et (c) sont réalisés en même temps, et dans lequel au moins une partie de ladite dispersion est récoltée de manière périodique ou continue.

11. Procédé selon l'une des revendications 1 à 10, **caractérisé en ce que** ladite dispersion est soumise à un deuxième traitement aux ultrasons, de préférence avec une puissance d'ultrasons et/ou une durée supérieures à celles de l'étape (c).

12. Procédé selon l'une des revendications 1 à 10, **caractérisé en ce que** ladite dispersion est soumise ensuite à un traitement par chauffage micro-ondes.

13. Procédé de préparation de particules ou feuillets de graphène, dans lequel on prépare une dispersion de particules ou feuillets de graphène selon l'une quelconque des revendications 1 à 12, suivi d'une ou plusieurs étapes dans laquelle on récupère à partir de ladite suspension les particules ou feuillets de graphène.

14. Dispositif pour la mise en oeuvre du procédé selon l'une des revendications 1 à 10, comprenant

    - un (3) moyen capable de tenir ledit barreau ou bloc (5) en matériau massif M,
    - un substrat pourvu d'une surface S (2) pouvant être en contact avec ledit barreau ou bloc (5) en matériau massif M,
    - un moyen de déplacement (1) permettant de générer un déplacement relatif entre ledit matériau massif M et ledit substrat,
    - un moyen de régulation et/ou contrôle de la force de pression (4) permettant de réguler, garder constant et/ou mesurer la force de pression entre ledit matériau massif M et ladite surface S dudit substrat pendant ledit déplacement relatif,
    - un réservoir de liquide (19) permettant d'immerger au moins partiellement la surface S dans une phase liquide (6),
    - un générateur d'ultrasons (7) permettant de soumettre ledit liquide (6) à l'effet d'ultrasons,
    - optionnellement un moyen de vidange (22) pour la vidange continue ou périodique dudit réservoir de liquide (19), pour prélever ladite phase liquide (6).


**Patentansprüche**

1.  Verfahren zur Herstellung einer Dispersion von Graphenpartikeln oder -plättchen in einem flüssigen Medium F, welches die folgenden Schritte umfasst:

    (a) Beschaffen eines Stabes oder Blocks (5) aus massivem Material M auf Graphitbasis, wobei das besagte Material auf Graphitbasis bevorzugt ausgewählt ist aus Bleistiftgraphit, natürlichem Graphit, synthetischem Graphit;
    (b) Reiben des besagten Materials M auf der Oberfläche S (2) eines Substrats, so dass eine Reibespur des besagten Materials M auf der besagten Oberfläche S (2) des besagten Substrats gebildet wird, wobei die Reibegeschwindigkeit zwischen dem besagten Material M (5) und der besagten Oberfläche S (2) zwischen 0,001 m s$^{-1}$ und 0,1 m s$^{-1}$ beträgt, und/oder die besagte Oberfläche (2) des besagten Substrats eine Rauigkeit von zwischen 0,01 $\mu$m und 10 $\mu$m besitzt;
    (c) Eintauchen des besagten Substrats in ein flüssiges Medium L (6) und Aussetzen des besagten flüssigen Mediums L (6) gegenüber Ultraschall, um eine Dispersion von Graphenpartikeln oder -plättchen in dem besagtem flüssigen Medium L (6) zu erhalten,

wobei die Schritte (b) und (c) zumindest teilweise nacheinander oder gleichzeitig ausgeführt werden können.

2. Verfahren nach Anspruch 1, wobei die besagte flüssige Phase L (6) ein reduzierendes Medium ist und vorteilhafterweise ein Reduktionsmittel enthält, ausgewählt aus der Gruppe, die gebildet wird von: $NaBH_4$, Hydrazin, Ammoniak.

3. Verfahren nach den Ansprüchen 1 oder 2, **dadurch gekennzeichnet, dass** es des Weiteren einen Schritt (d) enthält, in welchem eventuelle organische oder mineralische Stoffe, die in der besagten Dispersion vorhanden sind, bevorzugt mittels Dekantieren oder Zentrifugieren oder mittels chemischer Auflösung abgetrennt werden.

4. Verfahren nach einem der Ansprüche 1 bis 3, **dadurch gekennzeichnet, dass** es des Weiteren einen Schritt (e) enthält, in welchen die besagte Dispersion an zu dicken graphitischen Partikeln und/oder Graphenplättchen, die eventuell in der besagten Dispersion vorhanden sind, bevorzugt mittels Dekantieren oder mittels Zentrifugieren abgereichert wird.

5. Verfahren nach einem der Ansprüche 1 bis 4, **dadurch gekennzeichnet, dass** es des Weiteren einen Schritt enthält, in welchem die Graphenplättchen aus der besagten Suspension rückgewonnen werden, und einen Schritt der Redispersion der besagten Graphenplättchen in einer flüssigen Phase.

6. Verfahren nach einem der Ansprüche 1 bis 5, **dadurch gekennzeichnet, dass** die Dicke der besagten Graphenpartikel oder -plättchen zwischen 1 und 50 nm beträgt und/oder die Anzahl an parallelen Graphenplättchen zwischen 1 und 50, bevorzugt zwischen 1 und 30 und noch bevorzugter zwischen 1 und 15 beträgt.

7. Verfahren nach einem der Ansprüche 1 bis 6, **dadurch gekennzeichnet, dass** das besagte Substrat ausgewählt ist aus Polymeren, bevorzugt flexiblen und/oder transparenten Polymeren, Gläsern, Keramiken, Silizium.

8. Verfahren nach einem der Ansprüche 1 bis 7, wobei die besagte Oberfläche S (2) des besagten Substrats und das besagte massive Material M (5) sich in mindestens zwei Achsen in Relativbewegung befinden, so dass ein seitlicher Versatz zwischen zwei benachbarten Spurensegmenten des besagten Materials M (5) auf der besagten Oberfläche S (2) hervorgerufen wird.

9. Verfahren nach Anspruch 8, wobei das besagte Substrat eine um ihre Achse drehbare Scheibe ist, und wobei die Reibespur des besagten massiven Materials M (5) auf der besagten Oberfläche (2) mithilfe eines Seitwärtsbewegungsmittels (9) kontinuierlich oder periodisch versetzt wird, so dass eine durchgehende Spur, bevorzugt in Form einer Spirale, erzielt wird.

10. Verfahren nach einem der Ansprüche 1 bis 9, wobei die Schritte (b) und (c) gleichzeitig ausgeführt werden, und wobei zumindest ein Teil der besagten Dispersion periodisch oder kontinuierlich geerntet wird.

11. Verfahren nach einem der Ansprüche 1 bis 10, **dadurch gekennzeichnet, dass** die besagte Dispersion einer zweiten Ultraschallbehandlung, bevorzugt mit einer höheren Ultraschallleistung und/oder -dauer als jenen aus Schritt (c) ausgesetzt wird.

12. Verfahren nach einem der Ansprüche 1 bis 10, **dadurch gekennzeichnet, dass** die besagte Dispersion anschließend einer Behandlung mittels Mikrowellenerwärmung ausgesetzt wird.

13. Verfahren zur Herstellung von Graphenpartikeln oder - plättchen, wobei eine Dispersion von Graphenpartikeln oder -plättchen nach einem der Ansprüche 1 bis 12 hergestellt wird, gefolgt von einem oder mehreren Schritten, in welchen die Graphenpartikel oder -plättchen aus der besagten Suspension rückgewonnen werden.

14. Vorrichtung zur Umsetzung des Verfahrens nach einem der Ansprüche 1 bis 10, umfassend

- ein (3) Mittel, welches in der Lage ist, den besagten Stab oder Block (5) aus massivem Material M zu halten,
- ein Substrat, welches mit einer Oberfläche S (2) versehen ist, die sich mit dem besagten Stab oder Block (5) aus massivem Material M in Kontakt befinden kann,
- ein Bewegungsmittel (1), welches es ermöglicht, eine Relativbewegung zwischen dem besagten massiven Material M und dem besagten Substrat zu erzeugen,
- ein Anpresskraft-Regel- und/oder Steuerungsmittel (4), welches es ermöglicht, die Anpresskraft zwischen dem besagten massiven Material M und der besagten Oberfläche S des besagten Substrats während der besagten Relativbewegung zu regeln, konstant zu halten und/oder zu messen,

- einen Flüssigkeitsbehälter (19), welcher es ermöglicht, die Oberfläche S zumindest teilweise in eine flüssige Phase (6) einzutauchen,
- einen Ultraschallgenerator (7), welcher es ermöglicht, die besagte Flüssigkeit (6) der Wirkung von Ultraschall auszusetzen,
- optional ein Entleermittel (22) zum kontinuierlichen oder periodischen Entleeren des besagten Flüssigkeitsbehälters (19), um die besagte flüssige Phase (6) zu entnehmen.

**Claims**

1. Method for manufacturing a dispersion of graphene particles or lamellae in a liquid medium L, comprising the following steps:

   (a) a bar or block (5) of sold material M based on graphite is procured, said graphite-based material preferably being chosen from pencil lead, natural graphite or synthetic graphite;
   (b) said material M is rubbed on the surface S (2) of a substrate so as to create a rubbing trace of said material M on said surface S (2) of said substrate, the speed of rubbing between said material M (5) and said surface S (2) being between $0.001$ m.s$^{-1}$ and $0.1$ m.s$^{-1}$, and/or said surface (2) of said substrate having a roughness of between $0.01$ $\mu$m and $10$ $\mu$m;
   (c) said substrate is soaked in a liquid medium L (6) and said liquid medium L (6) is subjected to ultrasound in order to obtain a dispersion of graphene particles or lamellae in said liquid medium L (6),

   steps (b) and (c) being able to be performed at least partly successively, or at the same time.

2. Method according to claim 1, in which said liquid phase (6) is a reducing medium and advantageously comprises a reducing agent selected from the group consisting of: $NaBH_4$, hydrazine and ammonia.

3. Method according to claim 1 or 2, **characterised in that** it also comprises a step (d) in which any organic or mineral matter present in said dispersion is separated, preferably by settling or centrifugation, or by chemical dissolution.

4. Method according to any one of claims 1 to 3, **characterised in that** it also comprises a step (e) in which said dispersion is depleted of any excessively thick graphite particles and/or graphene lamellae present in said dispersion, preferably by settling or centrifugation.

5. Method according to any one of claims 1 to 4, **characterised in that** it also comprises a step in which the graphene lamellae are recovered from said suspension, and a step of redispersion of said graphene lamellae in a liquid phase.

6. Method according to any of claims 1 to 5, **characterised in that** the thickness of said graphene particles or lamellae is between 1 and 50 nm and/or the number of parallel graphene lamellae is between 1 and 50, preferentially between 1 and 30 and even more preferentially between 1 and 15.

7. Method according to any one of claims 1 to 6, **characterised in that** said substrate is selected from polymers, preferably flexible and/or transparent polymers, glasses, ceramics and silicon.

8. Method according to one of claims 1 to 7, in which said surface S (2) of said substrate and said solid material M (5) are in relative movement on at least two axes, so as to cause a lateral offset between two adjacent segments of traces of said material M (5) on said surface S (2).

9. Method according to claim 8, in which said substrate is a disc capable of rotating about its axis, and in which the rubbing trace of said solid material M (5) on said surface (2) is shifted continuously or periodically by means of a lateral movement means (9) so as to obtain a continuous trace, preferable in the form of a spiral.

10. Method according to one of claims 1 to 9, in which steps (b) and (c) are performed at the same time, and in which at least some of said dispersion is periodically or continuously harvested.

11. Method according to one of claims 1 to 10, **characterised in that** said dispersion is subjected to a second ultrasound treatment, preferably with an ultrasound power and/or duration greater than those of step (c).

12. Method according to one of claims 1 to 10, **characterised in that** said dispersion is next subjected to a treatment by microwave heating.

13. Method for preparing graphene particles or lamellae, in which a dispersion of graphene particles or lamellae is prepared according to any of claims 1 to 12, followed by one or more steps in which the graphene particles or lamellae are recovered from said suspensions.

14. Device for implementing the method according to one of claims 1 to 10, comprising

- a means (3) capable of holding said bar or block (5) of solid material M,
- a substrate provided with a surface S (2) that can be in contact with said bar or block (5) of solid material M,
- a movement means (1) for generating a relative movement between said solid material M and said substrate,
- a means for regulating and/or controlling the pressure force (4) for regulating, keeping constant and/or measuring the pressure force between said solid material M and said surface S of said substrate during said relative movement,
- a reservoir (19) of liquid for at least partially immersing the surface S in a liquid phase (6),
- an ultrasound generator (7) for subjecting said liquid (6) to the ultrasound effect,
- optionally a drainage means (22) for the continuous or periodic drainage of said reservoir (19) of liquid, for taking off said liquid phase (6).

Figure 1

Figure 2

Figure 3

Figure 4

Figure 5

Figure 6

Figure 7

Figure 8

Figure 9

## RÉFÉRENCES CITÉES DANS LA DESCRIPTION

**Documents brevets cités dans la description**

- WO 2005084172 A
- US 20050255034 A1
- WO 2008060703 A
- US 20080206124 A1
- US 7081258 B1
- US 20080279756 A1
- US 20080248275 A1
- US 20060121279 A1

**Littérature non-brevet citée dans la description**

- **K.S. NOVOSELOV ; A.K. GEIM ; S.V. MOROZOV et al.** *Science,* 2004, vol. 306, 666
- **K.S. NOVOSELOV ; D. JIANG et al.** *Proc. Natl.Acad. Sci. USA,* 2005, vol. 102, 10451
- **Y. ZHANG ; Y. TAN ; H.L. STORMER ; P. KIM.** *Nature,* 2005, vol. 438, 201
- **K.S. NOVOSELOV ; A.K. GEIM et al.** *Nature,* 2005, vol. 438, 197
- **K.I. BOLOTIN ; K.J. SIKES ; Z. ZIANG et al.** *Sol. State Comm.,* 2008, vol. 146, 351
- **F. MIAO ; S. WIJERATNE ; Y. ZHANG ; U. C. COSKON et al.** *Science,* 2007, vol. 317, 1530
- **C. BERGER ; Z.M. SONG ; X.B. LI et al.** *Science,* 2006, vol. 312 (5777), 1191
- **C. BERGER ; Z.M. SONG ; T.B. LI et al.** *J. Phys. Chem. B,* 2004, vol. 108 (52), 19912
- **J. CORAUX ; A.T. N'DIAYE ; C. BUSSE ; T. MICHELY.** *Nanoletters,* 2008, vol. 8, 565
- **J. VAARI ; J. LAHTINEN ; P. HAUTOJÄRVI.** *Catal. Lett.,* 1997, vol. 55, 43
- **D.E. STARR ; E.M. PAZHETNOV et al.** *Surface Science,* vol. 600, 2688
- **M. DRESSELHAUS et al.** *Nano Letters,* 2009
- **M. CHOUCAIR ; P. THORDARSON ; J. A. STRIDE.** *Nature Nano.,* 2009, vol. 4, 30-33